# EUROPÄISCHE PATENTANMELDUNG

(11) **EP 2 790 076 A1**
(43) Veröffentlichungstag der Anmeldung: **15.10.2014**
(21) Anmeldenummer: 13163111.1
(22) Anmeldetag: 10.04.2013
(51) Int. Cl.: G05B 19/05, G05B 19/409

(54) **Verfahren zum Bedienen einer Produktions- oder Werkzeugmaschine, Computerprogramm zur Implementierung des Verfahrens und Bedieneinrichtung mit einem solchen Computerprogramm**

(71) Anmelder: Siemens Aktiengesellschaft, 80333 München (DE)
(72) Erfinder: Kolster, Daniel, 52068 Aachen (DE); Kaever, Michael, 91056 Erlangen (DE); Scheuermann, Uwe, 90431 Nürnberg (DE); Herfs, Werner, 52525 Waldfeucht (DE); Lohse, Wolfram, 52072 Aachen (DE)

(57) **Zusammenfassung**

Angegeben werden ein Verfahren zum Bedienen einer Produktions- oder Werkzeugmaschine (10), wobei einzelne Funktionen einer solchen Maschine (10) über kleine kompakte Programmcode-Einheiten (30) zugänglich sind, wobei eine Mehrzahl von Programmcode-Einheiten (30) zusammengefasst werden, um einen Handlungsablauf beim Bedienen der Produktions- oder Werkzeugmaschine (10) zu definieren, wobei eine solche Zusammenfassung einer Mehrzahl von Programmcode-Einheiten (30) auf einer zum Bedienen der Produktions- oder Werkzeugmaschine (10) vorgesehenen Bedienoberfläche (34) platziert wird und wobei die auf der Bedienoberfläche (34) platzierte Zusammenfassung von Programmcode-Einheiten (30) zur Auslösung des damit definierten Handlungsablaufs aufgerufen wird, sowie ein Computerprogramm (48) zur Implementierung des Verfahrens und eine Bedieneinrichtung (14) mit einem solchen Computerprogramm (48).

## Beschreibung

Die Erfindung betrifft ein Verfahren zum Bedienen einer Produktions- oder Werkzeugmaschine. Im Weiteren betrifft die Erfindung auch ein Computerprogramm zur Implementierung des Verfahrens sowie eine zum Bedienen der jeweiligen Produktionsmaschine vorgesehene Bedieneinrichtung mit einem solchen Computerprogramm.

Heutige Produktions- und Werkzeugmaschinen weisen funktionsorientierte Bedienpanels und grafische Bedienoberflächen (GUI = Graphical User Interface) auf. Diese bilden eine Mensch-Maschine-Schnittstelle (HMI = Human Machine Interface) und spiegeln nach Ansicht der Erfinder nicht durchgängig und noch nicht in optimaler Weise die Aufgaben wieder, die ein Bediener einer solchen Maschine (Maschinenbediener) ausführt. Schaltflächen und Menues sind nämlich in vorgegebenen hierarchischen Strukturen angeordnet, die sich an einzelnen Funktionen der jeweiligen Produktions- oder Werkzeugmaschine (Maschinenfunktionen) orientieren.

In der Mobilfunkbranche hat sich mit den sogenannten Smartphones das Konzept kompakter modularer Anwendungen und für diese die Bezeichnung "App" etabliert. Bei diesen Apps handelt es sich um kleine kompakte Programmcode-Einheiten und entsprechend werden im Folgenden die Begriffe App und Programmcode-Einheit synonym verwendet.

Auf einer virtuellen Benutzeroberfläche (Desktop) eines Smartphones sind zum Zugriff auf solche Apps oftmals eine Vielzahl von Piktogrammen, also möglichst selbsterklärende Bilder, in einer matrixförmigen Anordnung (gekachelte Anordnung) dargestellt. Im heutigen Sprachgebrauch hat sich für die Bezeichnung solcher Piktogramme der Begriff Icon durchgesetzt, so dass dieser auch im Folgenden verwendet wird. Mit jedem Icon ist jeweils eine App der oben genannten Art assoziiert, die nominell eine in sich geschlossene Funktion ausführt. Für den Benutzer eines Smartphones verbirgt sich die jeweilige App gleichsam hinter dem Icon und bei einer Auswahl des Icons mittels entsprechender Bedienhandlungen in Bezug auf die Benutzeroberfläche wird die damit jeweils assoziierte App aufgerufen und gestartet.

Bei Smartphones existieren derzeit erste einfache Aufrufverbindungen zwischen Apps, beispielsweise eine App, die einen Browser aufruft, oder Apps, die auf gemeinsame Dateien zugreifen. Dies ist eine Funktionalität, die integraler Bestandteil der jeweiligen App ist. Zum Beispiel ist der Aufruf eines Browsers durch eine App in Form der von der App umfassten Programmcodeanweisungen fest kodiert. Vor allem umfassen diese Aufrufverbindungen keine übergreifende Logik und definieren keine workflowrelevante Verbindung zwischen den Apps.

Benötigte oder gewünschte Apps können vom Benutzer des Smartphones aus einem global erreichbaren Pool, in dem eine Vielzahl solcher Apps zum Abruf vorgehalten werden, ausgewählt und zum eigenen Gerät übertragen werden, wobei ein Icon zu der so ausgewählten App automatisch auf der eigenen Benutzeroberfläche erscheint oder dort vom Benutzer platziert wird. Mit einer solchen Beschaffung einer App wird eine neue Funktion auf dem Smartphone verfügbar. Der Benutzer eines Smartphones behält die Übersicht über die auf seinem Gerät verfügbaren Funktionen, indem die von den einzelnen Icons umfassten Darstellungen einen Hinweis auf die jeweilige Funktion geben, zum Beispiel indem schematisch vereinfacht ein Telefonhörer dargestellt ist (Anwendung zum Telefonieren) oder indem schematisch vereinfacht ein Kalender oder ein Kalenderblatt dargestellt ist (Anwendung, die einen Terminplaner implementiert). Auf diese Weise wird dem Benutzer des Smartphones ein leicht verständlicher Hinweis gegeben, welche Aktion oder Funktion und welche zugrunde liegende App hinter welchem Icon verborgen sind.

Für Produktions- oder Werkzeugmaschinen ist ein derartiger Ansatz bisher noch nicht adaptiert worden und aktuelle Verfahren zum Bedienen einer Produktions- oder Werkzeugmaschine basieren dementsprechend auf bekannten Prinzipien zur interaktiven Benutzerführung, nämlich sogenannte Menues mit verschachtelten Strukturen, die sich oftmals über viele Hierarchieebenen erstrecken. Der Bediener einer solchen Produktions- oder Werkzeugmaschine muss diese Hierarchie stets in ihrer Gesamtheit oder nahezu in ihrer Gesamtheit überblicken, um eine einzelne Funktion gezielt anzusteuern und anschließend auszuwählen.

Dem im Folgenden beschriebenen Ansatz stellt sich somit das Problem, dass heute gängige Bedienkonzepte für Produktions- oder Werkzeugmaschinen auf einer funktionsorientierten Herangehensweise basieren und dementsprechend die Strukturen der zum Bedienen der jeweiligen Maschine vorgesehenen Menues dieser Funktionsorientierung folgen.

Aus diesem Problem resultiert die dem hier vorgestellten Ansatz zugrunde liegende Aufgabe, ein neues Bedienkonzept zum Bedienen einer Produktions- oder Werkzeugmaschine in Form eines speziellen Verfahrens zum Bedienen einer Produktions- oder Werkzeugmaschine anzugeben. Diese Aufgabe wird mit einem Verfahren mit den Merkmalen des Anspruchs 1 gelöst.

Danach ist bei einem Verfahren zum Bedienen einer Produktions- oder Werkzeugmaschine Folgendes vorgesehen: Die Funktionen der Produktions- oder Werkzeugmaschine, nämlich zumindest einzelne Funktionen, wesentliche Funktionen oder alle Funktionen der Produktions- oder Werkzeugmaschine, sind über kleine kompakte Programmcode-Einheiten nach Art der von den sogenannten Smartphones bekannten Apps zugänglich. Diese können unabhängig voneinander aus verschiedenen Quellen und von verschiedenen Herstellern stammen und müssen nicht bereits bei ihrer Entwicklung fest miteinander verknüpft sein. Beispielsweise kann ein Messtaster in die jeweilige Produktions- oder Werkzeugmaschine integriert und über eigene Apps, die unabhängig und nicht fest in einen Gesamtablauf eingebunden sind, zum Steuern von Messungen bedient werden.

Um einen Handlungsablauf (Workflow) beim Bedienen der Produktions- oder Werkzeugmaschine zu definieren, ist eine Mehrzahl solcher Programmcode-Einheiten zusammenfassbar und wird zum Definieren eines solchen Handlungsablaufs zusammengefasst. So kann beispielsweise in einen Handlungsablauf zum Einrichten eines Werkstücks eine entsprechende App eines Messtasterherstellers zum Nullpunktantasten eingebaut werden.

Eine solche Zusammenfassung einer Mehrzahl von Programmcode-Einheiten wird auf einer zum Bedienen der Produktions- oder Werkzeugmaschine vorgesehenen Bedienoberfläche platziert. Die Zusammenfassung der Programmcode-Einheiten wird dort in geeigneter Form dargestellt. Zum Auslösen des mit der Zusammenfassung der Programmcode-Einheiten definierten Handlungsablaufs/Bedienablaufs wird die auf der Bedienoberfläche platzierte Zusammenfassung durch entsprechende Bedienhandlungen eines Bedieners der Produktions- oder Werkzeugmaschine ausgewählt und aufgerufen. Der in der Zusammenfassung/Container-App hinterlegte Handlungsablauf/Bedienablauf wird daraufhin gemäß der a priori konfigurierten Reihenfolge ausgeführt.

Eine Programmcode-Einheit der oben genannten Art wird im Folgenden mitunter auch nur kurz als App bezeichnet. Eine einzelne Programmcode-Einheit, die genau eine Funktion der Produktions- oder Werkzeugmaschine zugänglich macht oder aufruft, wird als atomare Programmcode-Einheit oder kurz als atomare App bezeichnet. Eine Zusammenfassung mehrerer Programmcode-Einheiten erscheint nach außen selbst wie eine Programmcode-Einheit und wird entsprechend als Container-Programmcode-Einheit oder kurz als Container-App bezeichnet. Weil eine solche Zusammenfassung mehrerer Programmcode-Einheiten nach außen, also auf der Bedienoberfläche der Produktions- oder Werkzeugmaschine, selbst wie eine Programmcode-Einheit erscheint, ist sie genau wie eine atomare App auswählbar und aufrufbar. Ein Aufruf einer solchen Container-App löst den Aufruf der in der Container-App zusammengefassten Apps aus. Eine Aufrufreihenfolge der in der Container-App zusammengefassten Apps ergibt sich aus einer Reihenfolge, in der die in der Container-App zusammengefassten Apps dort angeordnet sind. Der durch eine Container-App definierte Handlungsablauf (Workflow) wird also maßgeblich durch die Reihenfolge der einzelnen Apps innerhalb der Container-App vorgegeben. Wenn ein Handlungsablauf geändert werden soll, kommt für eine solche Änderung also eine Anpassung der Reihenfolge der Apps innerhalb einer Container-App in Betracht.

Ein Workflow muss dabei nicht immer rein linear sein. Zur erleichterten Bezugnahme wird eine erste App in einer Container-App als Start-App und jede weitere App als Folge-App bezeichnet. Eine Ausführung einer Folge-App kann vom Ergebnis einer Ausführung der vorangehenden App abhängig gemacht werden. So macht es unter Umständen zum Beispiel wenig Sinn, eine Folge-App aufzurufen, wenn eine Ausführung einer unmittelbar vorangehenden App nicht erfolgreich war. In anderen Konstellationen kann es sinnvoll sein, je nach Ergebnis einer Ausführung einer App unterschiedliche Folge-Apps auszuführen, zum Beispiel indem bei einem Fehler einer durch eine App ausgelösten Messung mittels eines Messtasters eine App für eine manuelle Eingabe von Nullpunktkorrekturen aufgerufen wird und dann der Ablauf innerhalb der Container-App fortgesetzt wird.

Der Vorteil des hier vorgestellten Ansatzes besteht darin, dass mit der jetzt möglichen handlungsorientierten Sicht eine Bedienoberfläche einer Produktions- oder Werkzeugmaschine zum Vorteil des Bedieners umstrukturiert werden kann. Im Wege der Zusammenfassung einzelner Programmcode-Einheiten zu Container-Apps ergeben sich virtuelle Handlungsabläufe. Durch solche virtuelle Handlungsabläufe sind reale Handlungsabläufe abbildbar und bei einer Umsetzung des hier vorgestellten Ansatzes werden solche Handlungsabläufe durch Zusammenfassung einzelner Programmcode-Einheiten definiert. Ein Aufruf einer solchen Zusammenfassung von Programmcode-Einheiten, also ein Aufruf der jeweiligen Container-App, bewirkt die Auslösung des jeweiligen Handlungsablaufs.

Die Zusammenfassung einzelner Apps in einer Container-App bewirkt zudem die Zusammenfassung der zugrunde liegenden Funktionen der Produktions- oder Werkzeugmaschine an einem Ort. Dies ist einer der zentralen Unterschiede zu dem bisherigen Bedienkonzept einer Produktions- oder Werkzeugmaschine, bei dem solche Funktionen über die komplette jeweilige Menuestruktur verteilt sein können und jeweils separat aufgerufen werden müssen. Die Zusammenfassung einzelner Apps in einer Container-App nimmt dem Bediener also nicht nur die Frage nach einer sinnvollen oder gegebenenfalls sogar zwingenden Aufrufreihenfolge der einzelnen Funktionen, sondern auch die zeitaufwändige und fehleranfällige Suche nach den einzelnen Funktionen ab.

Ein wesentlicher Unterschied des hier vorgestellten Ansatzes im Vergleich zu dem bei Smartphones vorgesehenen Bedienkonzept besteht in der Unterscheidung zwischen atomaren Apps und Container-Apps, also zusammengesetzten Apps. Atomare Apps stellen bei Smartphones einfache, elementare Funktionen zur Verfügung, insbesondere Systemfunktionen, die nicht weiter aufgeteilt werden können. Nicht in Betracht gezogen wurde bisher, auch nicht bei Smartphones, solche Apps als Bausteine für Container-Apps zu verwenden.

Der hier vorgestellte Ansatz ist ausdrücklich nicht auf den Bereich der Bedienung von Produktions- oder Werkzeugmaschinen beschränkt und kommt für grundsätzlich jede Bedienoberfläche elektrischer oder elektronischer Geräte in Betracht, also zum Beispiel auch für industrieller Steuerungseinrichtungen, insbesondere speicherprogrammierbare Steuerungen, Prozessrechner und dergleichen, Smartphones, PDAs und so weiter. Entsprechend wird im Folgenden anstelle des bisher verwendeten Ausdrucks "Produktions- oder Werkzeugmaschine" zur besseren Lesbarkeit, aber ohne Verzicht auf eine weitergehende Allgemeingültigkeit, nur noch der Ausdruck Produktionsmaschine verwendet. An jeder Stelle, wo im Folgenden als Kurzform des Ausdrucks "Produktions- oder Werkzeugmaschine" nur der Begriff "Produktionsmaschine" verwendet wird, soll dieser stets ausdrücklich auch eine Werkzeugmaschine umfassen. Wie oben skizziert kann in dem Ausdruck "Verfahren zum Bedienen einer Produktionsmaschine" der Begriff Produktionsmaschine auch noch weiter gefasst werden, weil sich der hier beschriebene Ansatz und dessen Ausgestaltungen zur Bedienung grundsätzlich beliebiger elektrischer oder elektronsicher Geräte eignet. Daher soll für die Auslegung des Begriffs Produktionsmaschine gelten, dass dieser über Werkzeugmaschinen hinaus zumindest auch allgemeine Steuerungseinrichtungen zum Steuern und/oder Überwachen eines technischen Prozesses umfasst.

Für die oben erwähnte Zusammenfassung mehrerer Apps ist eine Editorumgebung vorgesehen. Diese erlaubt bei Bedarf auch eine Konfiguration der einzelnen Apps oder Container-Apps. Die Zusammenfassung mehrerer Apps in einer Container-App bedingt eine Reihenfolge der Apps innerhalb der Container-App und damit eine vorgegebene Aufrufreihenfolge. Die Aufrufreihenfolge muss dabei nicht notwendig der Reihenfolge der Apps innerhalb der Container-App entsprechen und es sind insoweit auch Sprünge und Verzweigungen möglich. In jedem Fall wird durch die Reihenfolge der Apps oder eine sonstige Verknüpfung der Apps untereinander - etwa durch eine Definition einer App als Sprungziel in Abhängigkeit vom Ergebnis einer Ausführung einer App - ein vorgegebener Handlungsablauf definiert. Über definierte Standardschnittstellen tauschen die einzelnen Apps untereinander und/oder mit einer Laufzeitumgebung des jeweiligen Hostsystems, also der Laufzeitumgebung der jeweiligen Produktionsmaschine oder der Laufzeitumgebung der HMI-Plattform, Daten aus und/oder setzen zur Laufzeit Systemparameter wie beispielsweise Nullpunkte, ein auszuführendes Teileprogramm, ein dazustellendes virtuelles Tastaturlayout, usw.

Die einzelnen Apps können dabei in Kontrollstrukturen eingebettet sein, die den Handlungsablauf/Workflow entweder sehr allgemein, aber gegebenenfalls auch sehr komplex definieren. Bei einer einfachen Zusammenfassung mehrerer Apps in einer Container-App bewirkt diese Zusammenfassung, dass eine erste Folge-App an die Start-App und jede weitere Folge-App an die in der Reihenfolge innerhalb der Container-App vorangehende App gebunden wird. Es entsteht also eine Struktur, wie sie zum Beispiel von sogenannten verketteten Listen bekannt ist, bei der jedes Listenelement das innerhalb der Liste jeweils nachfolgende Listenelement referenziert. Genauso, wie bei einer verketteten Liste die einzelnen Listenelemente im Speicher nicht aufeinander folgen müssen, kann auch durch Verknüpfung einer App und einer Folge-App eine von der Reihenfolge der Apps in der Container-App abweichende Aufrufreihenfolge entstehen. Innerhalb solcher Verknüpfungen kann noch vorgesehen sein, dass eine App zum Beispiel so lange ausgeführt wird, bis die Ausführung (zum Beispiel eine Messwertaufnahme oder eine Positionierung eines Antriebs) erfolgreich abgeschlossen ist. Für komplexere Handlungsabläufe/Workflows kann des Weiteren vorgesehen sein, dass eine App mit unterschiedlichen Folge-Apps verknüpft ist und dass aus den verknüpften Folge-Apps eine Folge-App in Abhängigkeit von einer Bedingung ausgewählt wird. Dann kann im Handlungsablauf zum Beispiel zu einer ersten Folge-App verzweigt werden, wenn ein unterhalb eines Schwellwerts liegender Messwert detektiert wurde, und zu einer anderen, zweiten Folge-App verzweigt werden, wenn der Messwert oberhalb des Schwellwerts liegt. In Abhängigkeit vom Zustand der Produktionsmaschine oder internen Zuständen der Laufzeitumgebung können auf diese Weise unterschiedlichste Situationen berücksichtigt werden, so dass eine Verzweigung der Handlungsabläufe/Workflows in Abhängigkeit von einem Messwert und einem Schwellwert hier nur als erläuterndes Beispiel zu verstehen ist.

Die jeweils resultierende Anordnung und Zusammenstellung der einzelnen Apps in einer Container-App ist gespiegelt an einem realen Tätigkeitsprofil eines Bedieners der jeweiligen Produktionsmaschine und führt diesen anhand der bereitgestellten Container-Apps durch virtuelle Handlungsabläufe. Dabei entspricht eine Container-App einem konkreten Handlungs- oder Bedienablauf. Im Folgenden wird ohne Verzicht auf eine weitergehende Allgemeingültigkeit durchgängig der Begriff Handlungsablauf verwendet, wobei davon stets auch ein Bedienablauf oder dergleichen umfasst sein soll.

Entlang eines Handlungsablaufs wird zu jedem Zeitpunkt der Überblick gewahrt und es werden bei Bedarf Handlungsempfehlungen gegeben. Die beschriebenen Container-Apps werden dabei nach Art der von den Smartphones bekannten Icons auf der jeweiligen virtuellen Bedienoberfläche der Produktionsmaschine durch beschriftete und/oder grafische Symbole dargestellt.

Vorteilhafte Ausgestaltungen des hier vorgestellten Ansatzes sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass es sich bei einer Programmcode-Einheit, die eine Funktion der Produktionsmaschine zugänglich macht, entweder um eine atomare, nicht weiter unterteilbare Programmcode-Einheit oder eine zusammengesetzte Programmcode-Einheit handelt. Eine zusammengesetzte Programmcode-Einheit stellt dabei eine Kombination einer oder mehrerer atomarer und/oder einer oder mehrerer zusammengesetzter Programmcode-Einheiten dar. Die Verwendung solcher Programmcode-Einheiten bietet also eine flexible und gleichzeitig mächtige Basis zum Zugriff auf einzelne Funktionen der Produktionsmaschine und zur Spezifikation von Handlungsanweisungen durch eine Zusammenfassung solcher Programmcode-Einheiten.

Bei einer weiteren Ausführungsform des Verfahrens ist demgemäß vorgesehen, dass die oder jede auf der Bedienoberfläche platzierte Zusammenfassung von Programmcode-Einheiten in Form einer Zusammenfassung einzelner oder mehrerer atomarer und/oder einzelner oder mehrerer zusammengesetzter Programmcode-Einheiten gebildet ist.

Bei einer nochmals weiteren Ausführungsform des Verfahrens ist vorgesehen, dass die auf der Bedienoberfläche der Produktionsmaschine verfügbaren Apps optisch klar unterscheidbaren Gruppen zugeordnet sind. Eine solche Kategorisierung gewährleistet eine bessere Übersichtlichkeit der Bedienoberfläche. Dadurch bleibt auch bei einer großen Anzahl von Apps der Überblick über die angebotenen Funktionen erhalten. Zudem kann durch ein unterlagertes Rechte- und Rollenmodell für die Apps ein Systemschutz realisiert werden, das auch dazu führt, dass auf der Bedienoberfläche bestimmte Apps nur für bestimmte Benutzer sichtbar oder auswählbar sind. Nicht zugängliche oder nicht erlaubte Apps (und die damit realisierten Systemfunktionen) können vordefinierten Benutzern oder Benutzergruppen damit verborgen werden. Dadurch lässt sich beim Betrieb der Produktionsmaschine und speziell bei der Bedienung der Produktionsmaschine eine bisher oftmals unvermeidliche visuelle Reizüberflutung des Benutzers und auch die kognitive Belastung während der Maschinenbedienung erheblich reduzieren. Ein solches Rechte- und Rollenmodell ermöglicht zusätzlich oder alternativ eine Festlegung der Aktionen, die für einzelne Apps erlaubt sind. Während beispielsweise einige Apps nur auf interne Daten der jeweiligen Produktionsmaschine zugreifen dürfen, ermöglichen andere Apps den Zugriff auf externe Datenquellen. Ein Beispiel ist eine App eines Werkzeugherstellers, die zur Laufzeit andere werkzeugbezogene Daten nachladen und bereitstellen kann, jedoch keinen direkten Zugriff auf die Maschinendaten erhält.

Eine Kommunikation der Apps untereinander und der Apps mit dem umliegenden Hostsystem (Laufzeitumgebung der jeweiligen Produktionsmaschine; Laufzeitumgebung der HMI-Plattform) kann im Wesentlichen nach einem ersten und einem zweiten Schema erfolgen. Bei einer Kommunikation nach dem ersten Schema werden in jedem Schritt des jeweiligen Handlungsablaufs, also bei jeder Ausführung einer App, die eingegebenen Daten und/oder vorgenommenen Änderungen im Hostsystem gespeichert. Alle im Handlungsablauf nachfolgenden Apps lesen über definierte Schnittstellen die für sie erforderlichen Daten aus dem Hostsystem. Der Vorteil liegt hier in einem reduzierten Kommunikationsaufwand zwischen den einzelnen Apps. Bei einer Kommunikation nach dem zweiten Schema werden ablaufrelevante Daten zwischen den Apps weitergereicht und gegebenenfalls gleichzeitig in einen Speicher des Hostsystems geschrieben, sofern es sich um Daten handelt, die stets aktuell im System vorliegen müssen. Der Vorteil liegt hier in einem verringerten Kommunikationsaufwand zwischen den Apps auf der einen Seite und dem Hostsystem auf der anderen Seite. Für beide Kommunikationsschemata sind geeignete Standardschnittstellen definiert, so dass eine Austauschbarkeit sowie eine reibungslose Kommunikation zwischen den Apps und/oder einer App und dem Hostsystem gewährleistet ist. Auf dieser Basis können zwei Kommunikationsgruppen unterschieden werden: eine App kommuniziert mit einer anderen App und eine App kommuniziert mit dem jeweiligen Hostsystem. Eine dritte Kommunikationsgruppe ergibt sich bei Konstellationen, bei denen eine App mit einer externen Datenquelle oder mehreren externen Datenquellen kommuniziert.

Der Vorteil des hier vorgestellten Ansatzes und einzelner Ausgestaltungen besteht damit insbesondere darin, dass sich durch die neuartige Betrachtungsweise und die resultierende Umstrukturierung der Bedienoberfläche einer Produktionsmaschine nach einem handlungsorientierten Vorbild in Form einer übergreifenden und flexibel individualisierbaren App-Struktur zur virtuellen Abbildung realer Handlungsabläufe ein neues Bedienkonzept für Produktionsmaschinen ergibt. Die Gliederung der Funktionen in atomare und zusammengesetzte Apps stellt eine neue Art der Maschinenbedienung dar. Der hier vorgestellte Ansatz geht damit deutlich über das heute bei Smartphones umgesetzte Prinzip hinaus, denn dort ist eine solche modulare Kombinierbarkeit und Erweiterbarkeit in Form der beschriebenen Container-Apps nicht vorgesehen. Bei dem hier vorgestellten Ansatz ist vorgesehen, dass atomare Apps mittels eines standardisierten Schnittstellenkonzepts in einer Editorumgebung modular mit anderen atomaren Apps zu einer neuen Container-App zusammenfassbar sind und im Rahmen einer Erstellung einer Bedienoberfläche zusammengefasst werden. Dadurch entstehen individuelle Handlungsabläufe.

Weiterhin können bei vorhandenen Handlungsabläufen und den diesen zugrunde liegenden Container-Apps modular einzelne atomare Apps ausgetauscht werden, um bei Bedarf den Handlungsablauf an benutzerspezifische Anforderungen anzupassen. Heutige Bedienabläufe sind dagegen in der Regel starr und nicht nachträglich und individuell anpassbar oder durch Drittanbieter-Funktionen erweiterbar. Die Austauschbarkeit erfasst beliebige Quellen, so dass auch von der jeweiligen Produktionsmaschine aus gesehen externe Datenspeicher in Frage kommen. Aufgrund der Modularität der Container-Apps können einzelne Apps zudem auf neue Softwareversionen gehoben werden, so dass die von einer Container-App umfassten einzelnen Apps getrennt innovierbar sind.

Die oben genannte Aufgabe wird auch mit einer Bedieneinrichtung zum Bedienen einer Produktionsmaschine gelöst, die nach dem Verfahren wie hier und im Folgenden beschrieben arbeitet und dazu Mittel zur Durchführung des Verfahrens umfasst. Die Implementation des Verfahrens erfolgt in Form eines durch die Bedieneinrichtung ausführbaren Computerprogramms. Die Neuerung ist damit einerseits auch ein solches Computerprogramm mit durch einen Computer ausführbaren Programmcodeanweisungen und andererseits ein Speichermedium mit einem solchen Computerprogramm, also ein Computerprogrammprodukt mit Programmcodemitteln, sowie schließlich auch eine Bedieneinrichtung zum Bedienen einer Produktionsmaschine mit einer Verarbeitungseinheit in Form von oder nach Art eines Mikroprozessors und mit einem Speicher, wobei in den Speicher als Mittel zur Durchführung des Verfahrens und seiner Ausgestaltungen ein solches Computerprogramm geladen oder ladbar ist und das beim Betrieb der Bedieneinrichtung durch dessen Verarbeitungseinheit ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung auch Änderungen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen für den Fachmann im Hinblick auf die Lösung der Aufgabe entnehmbar sind und durch kombinierbare Merkmale zu einem neuen Gegenstand oder zu neuen Verfahrensschritten/Verfahrensschrittfolgen führen.

Es zeigen
- FIG 1: eine schematisch vereinfachte Darstellung einer Produktionsmaschine mit einer zur Steuerung der Produktionsmaschine vorgesehenen Steuerungseinrichtung sowie einer Bedieneinrichtung,
- FIG 2: eine schematisch vereinfachte Darstellung einer hierarchischen Menuestruktur, wie sie derzeit zum Bedienen einer Produktionsmaschine mittels einer Bedieneinrichtung gemäß FIG 1 verwendet wird,
- FIG 3: eine flache Struktur von entsprechend dem hier vorgestellten Ansatz resultierenden Bedienmöglichkeiten mit linearen Bedienabläufen,
- FIG 4: einen vergrößerten Ausschnitt aus der Darstellung in FIG 3 mit einer Zusammenfassung einer Mehrzahl von Programmcode-Einheiten (Apps) zu einer Container-App mit integriertem vorgegebenem Bedienablauf,
- FIG 5: eine Darstellung einer Zusammenfassung von Programmcode-Einheiten wie in FIG 4 zur Verdeutlichung einer linearen und einer verzweigten Aufrufreihenfolge,
- FIG 6: eine beispielhafte Bedienoberfläche zum Bedienen einer Produktionsmaschine entsprechend dem hier vorgestellten Ansatz inkl. einer optischen Gruppierung der Piktogramme,
- FIG 7: eine erste Variante eines Datenaustausches zwischen einzelnen Apps und einem Hostsystem,
- FIG 8: eine zweite Variante eines Datenaustausches zwischen einzelnen Apps und einem Hostsystem und
- FIG 9: eine schematisch vereinfachte Darstellung einer zum Bedienen einer Produktionsmaschine vorgesehenen Bedieneinrichtung mit einem Speicher, in den ein Computerprogramm zur Umsetzung des hier beschriebenen Verfahrens ladbar oder geladen ist.

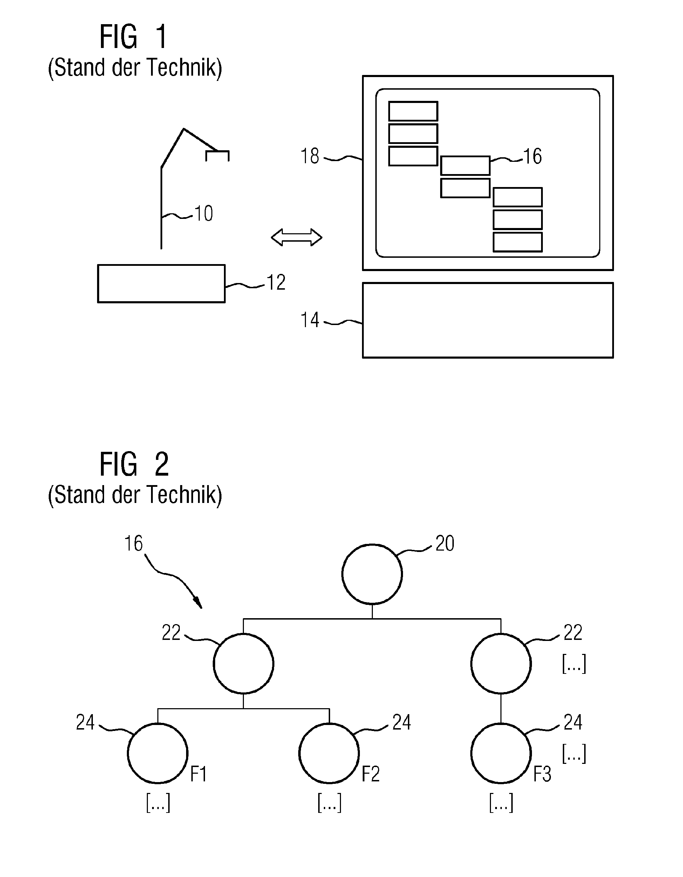

FIG 1 zeigt als Beispiel für eine Produktions- oder Werkzeugmaschine 10 oder allgemein einen gesteuerten und/oder überwachten technischen Prozess, zum Beispiel eines industriellen Produktions- oder Fertigungsprozesses, (im Folgenden zusammenfassend als Produktionsmaschine bezeichnet) einen schematisch stark vereinfachten Roboter. Eine Steuerung und/oder Überwachung einer solchen Produktionsmaschine 10 erfolgt mit einer Steuerungseinrichtung 12. Zur Konfiguration und Programmierung der Steuerungseinrichtung 12 wie auch zum Bedienen und Beobachten einer solchen Produktionsmaschine 10 ist eine Bedieneinrichtung 14 vorgesehen. Beim Konfigurieren und Programmieren der Produktionsmaschine 10 wie auch beim Bedienen und Beobachten der Produktionsmaschine 10 - hier und im Folgenden zusammenfassend als Bedienen bezeichnet - wählt ein Bediener die jeweils benötigte Funktion anhand eines hierarchisch strukturierten Menues 16 aus, das in an sich bekannter Art und Weise auf einem Bildschirm oder einer sonstigen Anzeigeeinrichtung 18 dargestellt wird, üblicherweise in Form statischer, horizontaler oder vertikaler Navigationsmenues oder Navigationsleisten.

Um in dem Menue 16 eine bestimmte Funktion auswählen zu können, muss der Bediener im Grunde bereits vor einer Auswahl der jeweiligen Funktion wissen, wo diese in der Menuehierarchie angeordnet ist oder der Benutzer muss die Funktion in der Menuehierarchie suchen. Die jeweilige Struktur des Menues 16 ergibt sich dabei aufgrund der bisherigen Funktionsorientierung des Bedienkonzepts. Dabei sind gleichartige Funktionen zu Gruppen zusammengefasst und häufig ergibt sich aus solchen Gruppen eine neue (tiefere) Hierarchieebene. Die Einführung solcher tieferen Hierarchieebenen folgt dem Wunsch, eine Anzahl der in einer Hierarchieebene zusammengefassten Funktionen nicht zu groß werden zu lassen, damit die Übersicht nicht unnötig erschwert wird.

Ein derartiges Menue 16 oder jede andere heute gebräuchliche Form eines funktionsorientierten Bedienpanels oder einer grafischen Bedienoberfläche (GUI) stellt damit die wesentliche Schnittstelle zwischen dem Bediener und der Produktionsmaschine 10 dar (Mensch-Maschine-Schnittstelle; HMI = Human Machine Interface).

FIG 2 ist eine andere Darstellung eines hierarchisch strukturierten Menues 16, wie in FIG 1 gezeigt. Danach umfasst ein solches Menue 16 ein Hauptmenue 20, ein oder mehrere hierarchisch tiefer angeordnete Untermenues 22, darunter gegebenenfalls weitere Untermenues (nicht dargestellt) und unterhalb der Untermenues 22 einzelne innerhalb des Menues 16 aufrufbare Funktionen 24, die hier zudem noch symbolisch mit "F1", "F2," und "F3" bezeichnet sind.

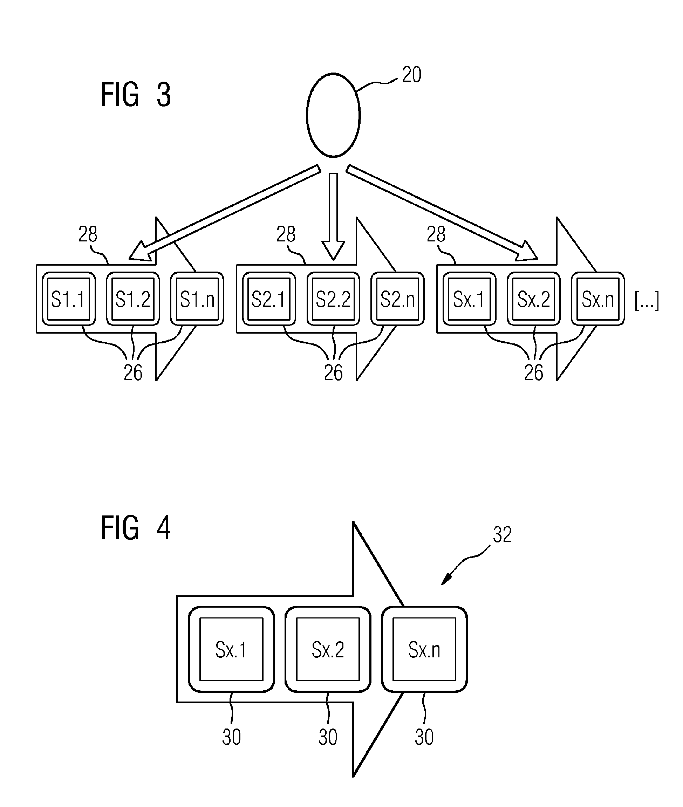

FIG 3 zeigt eine schematisch vereinfachte Darstellung des hier vorgeschlagenen Ansatzes. Eine Mehrzahl von Schritten 26 (S1.1, S1.2, S1.n) wird zu einer Schrittfolge 28 zusammengefasst. Durch Verwendung unterschiedlicher Schritte 26 (S2.1, S2.2, S2.n; Sx.1, Sx.2, Sx.n; usw.) ergeben sich dabei unterschiedliche Schrittfolgen 28. Jeder Schritt 26 entspricht einer ansonsten aus einem Menue 16 aufrufbaren Funktion 24 (FIG 2). Jeder Schritt 26 oder jede Funktion 24 ruft eine bestimmte Softwarefunktionalität in Bezug auf die Produktionsmaschine 10 auf oder stellt selbst eine solche Softwarefunktionalität dar.

Man erkennt die flache Hierarchie. Jede Schrittfolge 28 kann direkt aus dem Hauptmenue 20 aufgerufen werden. Ein umständliches Navigieren in einem hierarchisch strukturierten Menue 16, wie dies schematisch vereinfacht in FIG 2 gezeigt ist, entfällt damit.

Jeder in FIG 3 gezeigte Schritt 26 entspricht damit mittelbar oder unmittelbar einer kleinen kompakten Programmcode-Einheit 30 (FIG 4) nach Art der von den Smartphones bekannten Apps. Ein solcher Schritt 26 entspricht mittelbar einer derartigen Programmcode-Einheit 30, wenn der Schritt 26 nicht die Programmcode-Einheit 30 selbst, sondern einen Aufruf einer Programmcode-Einheit 30 darstellt. Ein Schritt 26 entspricht unmittelbar einer derartigen Programmcode-Einheit 30, wenn der Schritt 26 selbst die Programmcode-Einheit 30 ist.

Die Darstellung in FIG 4 ist ein vergrößerter Ausschnitt aus der Darstellung in FIG 3. Jedes bei der Beschreibung der Darstellung in FIG 3 noch als Schritt 26 bezeichnete Element stellt - wie oben erläutert - mittelbar oder unmittelbar eine Programmcode-Einheit 30 und damit eine App 30 dar. Die Zusammenfassung mehrerer Programmcode-Einheiten 30, also mehrerer Apps 30, stellt eine Container-App 32 dar. Eine solche Zusammenfassung mehrerer Programmcode-Einheiten/Apps 30 definiert einen Handlungsablauf beim Bedienen der Produktionsmaschine 10.

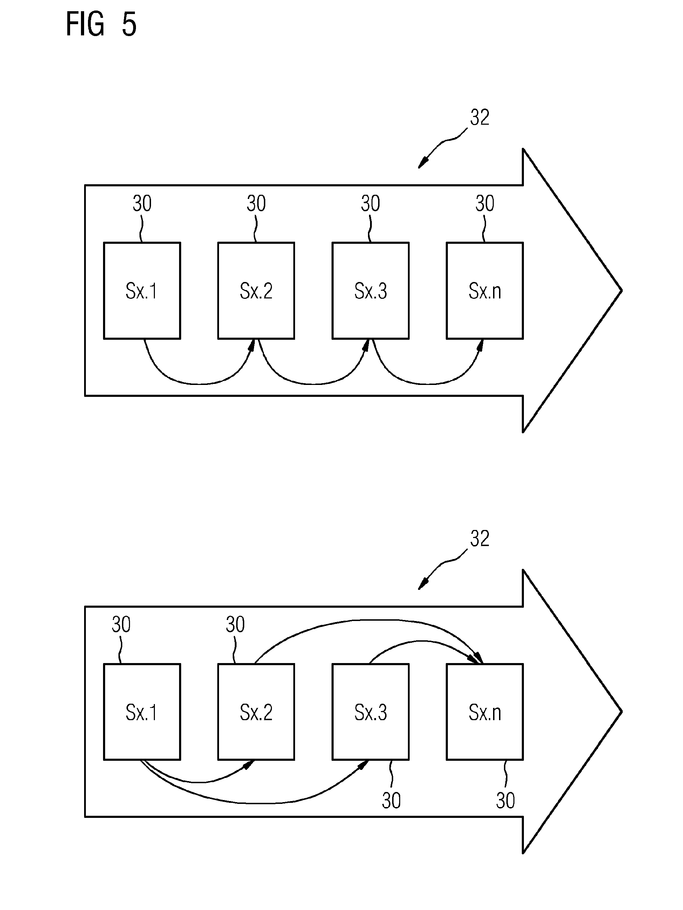

Die Darstellung in FIG 5 zeigt schematisch vereinfacht eine mögliche Art einer Zusammenfassung mehrerer Apps 30. Die Zusammenfassung kann dadurch entstehen, dass eine App 30 jeweils eine Folge-App 30 referenziert, wie dies in der Darstellung durch die jeweils zu einer Folge-App 30 führenden Pfeile angedeutet ist. Jeder Pfeil ist damit auch eine Darstellung einer Aufrufreihenfolge und damit eine Darstellung des resultierenden Handlungsablaufs/Workflows. Dass ein solcher Handlungsablauf/Workflow nicht notwendig linear der Reihenfolge der Apps 30 innerhalb der Container-App 32 entsprechen muss, zeigt die Darstellung in unteren Teil von FIG 5. Dort ist gezeigt, dass sich durch entsprechende Verknüpfung einer App 30 mit einer Folge-App 30 auch von einer solchen Reihenfolge abweichende Aufrufreihenfolgen realisieren lassen. In gleicher Weise kann eine App 30 mit mehr als einer Folge-App 30 verknüpft sein und die Auswahl einer jeweiligen Folge-App 30 kann von einer innerhalb der jeweiligen App 30, von der diese Verknüpfungen ausgehen, definierten Bedingung abhängen. Auf diese Weise lassen sich dynamisch veränderliche Handlungsabläufe/Workflows realisieren.

Die Darstellung im oberen Bereich von FIG 5 lässt auch erkennen, dass ein durch eine Zusammenfassung mehrerer Apps 30 definierter Handlungsablauf durch eine Vorgabe oder Änderung einer Verknüpfung der Apps 30 innerhalb der Zusammenfassung anpassbar ist und bei Bedarf angepasst wird. Wenn bei dem dargestellten Beispiel der symbolisch mit Sx.3 bezeichnete Schritt vor dem symbolisch mit Sx.2 bezeichneten Schritt ausgeführt werden soll, wird die Start-App 30 (Sx.1) nicht mit der unmittelbar nachfolgenden Folge-App 30, sondern mit der weiteren Folge-App 30 (Sx.3) verknüpft. Diese wird mit der symbolisch mit Sx.2 bezeichneten App 30 verknüpft und diese wiederum mit der symbolisch mit Sx.n bezeichneten App 30.

Des Weiteren lässt die Darstellung im unteren Bereich von FIG 5 auch erkennen, dass bei einer Verknüpfung einer App 30 mit einer Mehrzahl weiterer Apps 30 derselben Zusammenfassung (hier der symbolisch mit Sx.1 bezeichneten Start-App 30 mit den symbolisch mit Sx.2 und Sx.3 bezeichneten Folge-Apps 30) ein Ergebnis einer Ausführung der App 30, von der die Verknüpfungen ausgehen, die Auswahl einer der verknüpften Apps 30 bestimmt.

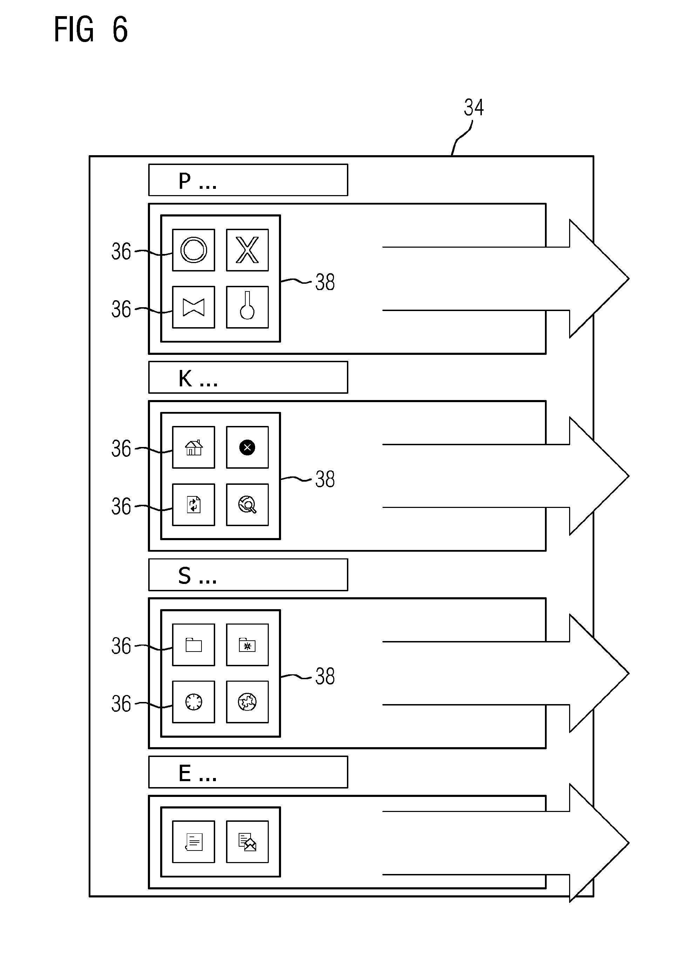

Die Darstellung in FIG 6 zeigt ein Beispiel für eine Bedienoberfläche 34 zum Bedienen der jeweiligen Produktionsmaschine 10. Eine solche Bedienoberfläche 34 wird auf einer Anzeigeeinrichtung 18 (FIG 1) einer zum Bedienen der jeweiligen Produktionsmaschine 10 vorgesehenen Bedieneinrichtung 14 (FIG 1) dargestellt. Man erkennt eine Mehrzahl von auf der Bedienoberfläche 34 platzierten Icons 36 (nicht alle bezeichnet). Jedes Icon 36 ist ein Stellvertreter für eine App 30 (FIG 4) oder eine Container-App 32 (FIG 4). Jedes Icon 36 ist durch eine entsprechende Bedienhandlung eines Bedieners der Produktionsmaschine 10 auf der Bedienoberfläche 34 auswählbar und aktivierbar. Eine solche Aktivierung (zum Beispiel mittels eines sogenannten Doppelklicks mit einem Zeigegerät oder durch eine entsprechende Bedienhandlung mittels des Fingers des Bedieners auf einer berührungssensitiven Oberfläche (Touchbedienung)) bewirkt einen Aufruf der jeweiligen App 30 / Container-App 32. Weil eine Container-App 32 eine Zusammenfassung einer Mehrzahl von Apps 30, ggf. eine Zusammenfassung einer Mehrzahl von Apps 30 und zusammengesetzten Apps 30, ist, werden bei einem solchen Aufruf einer Container-App 32 alle davon umfassten Apps 30 bedienergesteuert ausgeführt. Die Ausführung der Apps 30 geschieht dabei in der Reihenfolge, in der sie in der Container-App 32 angeordnet sind. Dies erklärt auch die systematische Identität einer Schrittfolge 28, wie in FIG 3 gezeigt, und einer Container-App 32, wie in FIG 4 gezeigt.

Die Darstellung in FIG 6 zeigt auch eine Gruppierung der Icons 36. In der beispielhaften Darstellung in FIG 6 sind jeweils Gruppen 38 von vier Icons 36 gebildet. Die Darstellung mit vier Icons 36 in einer Gruppe 38 ist völlig willkürlich und in der Praxis kann jede Gruppe 38 ein oder mehrere Icons 36 und damit auch mehr oder weniger als vier Icons 36 umfassen. Die einzelnen Icons 36 sind in einem virtuellen Raster matrixartig, also spaltenweise untereinander und zeilenweise nebeneinander, angeordnet. Durch die Zusammenfassung einzelner Icons 36 in einer Gruppe 38 werden die jeweiligen Icons 36 einer durch die Gruppe 38 repräsentierten Kategorie zugeordnet. Einzelnen Gruppen 38 / Kategorien kann eine erklärende Überschrift zugeordnet sein. In der Darstellung in FIG 6 sind die Überschriften nur angedeutet und "P..." steht für "Produktion", "K..." für "Konfiguration", "S..." für "Service" und "E..." für "Eigene Apps". Weil die Anzahl der jeweils auf der Bedienoberfläche gebildeten Gruppen 38 variieren kann, sind auch die dargestellten Überschriften und deren Anzahl nur als beispielhaft zu verstehen. Die von jeder Gruppe 38 ausgehenden und nach rechts weisenden Blockpfeile sind nicht Bestandteil der Bedienoberfläche 34 und sollen hier lediglich veranschaulichen, dass bei Aktivierung eines Icons 36 aus der Gruppe "Produktion" ein produktionsspezifischer Handlungsablauf, bei Aktivierung eines Icons 36 aus der Gruppe "Konfiguration" ein konfigurationsspezifischer Handlungsablauf ausgelöst wird, und so weiter.

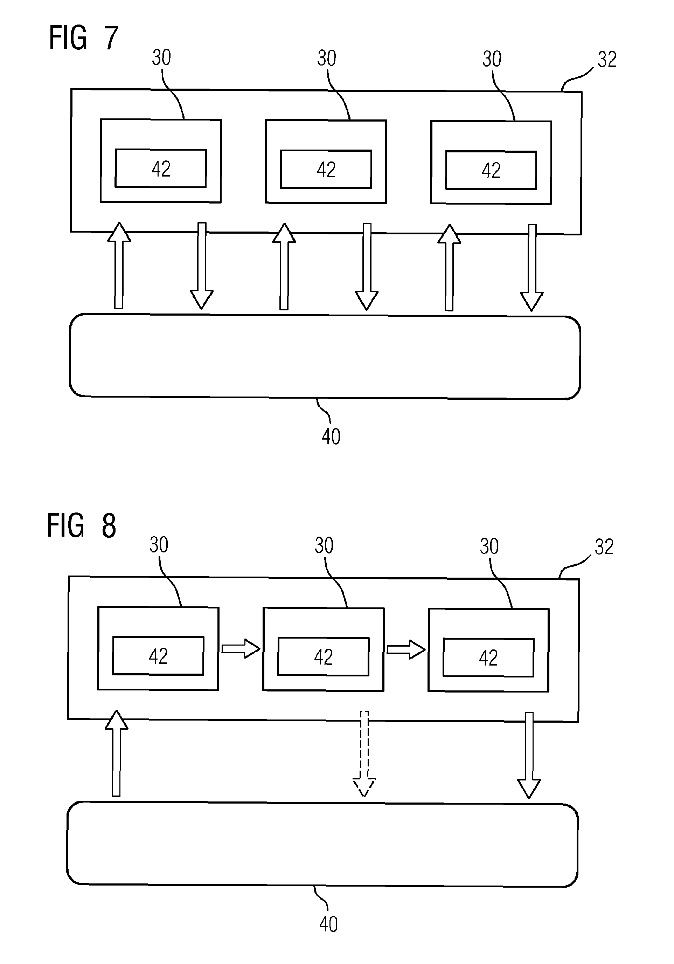

Die Darstellungen in FIG 7 und FIG 8 zeigen in einer schematisch vereinfachten Darstellung von den einzelnen Apps 30 ausgelöste Kommunikationsvorgänge beim Aufruf einer Container-App 32. Die Darstellung in FIG 7 veranschaulicht die in der Beschreibungseinleitung als erstes Schema bezeichneten Verhältnisse. Dabei werden in jedem Schritt während des jeweiligen Handlungsablaufs, also bei jeder Ausführung einer App 30, die eingegebenen Daten und/oder vorgenommenen Änderungen in einem jeweiligen Hostsystem 40 gespeichert. Die vertikal aufwärts weisenden Blockpfeile stehen dabei für einen lesenden Zugriff der jeweiligen App 30 auf das Hostsystem 40 und entsprechend stehen die vertikal abwärts weisenden Blockpfeile für einen schreibenden Zugriff der jeweiligen App 30 auf das Hostsystem 40. Es werden demnach in jedem Schritt des Handlungsablaufs, also durch jede während des Handlungsablaufs ausgeführte App 30, zunächst die für diese App 30 relevanten Daten gelesen und zum Ende der Ausführung der App 30 die während der Ausführung eingegebenen oder geänderten Daten gespeichert, so dass eine im Handlungsablauf nachfolgende App 30 durch einen erneuten lesenden Zugriff auf das Hostsystem 40 alle relevanten Daten abrufen kann und dabei sichergestellt ist, dass die abgerufenen Daten aktuell sind.

Die Darstellung in FIG 8 veranschaulicht die in der Beschreibungseinleitung als zweites Schema bezeichneten Verhältnisse. Dabei liest zumindest die erste in einem Handlungsablauf aufgerufene App 30 die jeweils benötigen Daten von dem Hostsystem 40. Innerhalb des Handlungsablaufs und innerhalb aufeinander folgender Apps 30 werden jedoch die Daten von einer App 30 zur nächstfolgenden App 30 weitergereicht. Dies ist durch die nach rechts weisenden Blockpfeile veranschaulicht. Ein schreibender Zugriff auf das Hostsystem 40 und damit eine Datenablage im Hostsystem 40 erfolgt zumindest durch die im Handlungsablauf letzte App 30. Theoretisch kann auch innerhalb des Handlungsablaufs ein schreibender Zugriff auf das Hostsystem 40 vorgesehen sein, zum Beispiel dann, wenn auch andere Apps 30 - etwa aus parallel ausgeführten Handlungsabläufen - die jeweils bearbeiteten Daten benötigen oder wenn die jeweils bearbeiteten Daten stets aktuell im System vorliegen müssen.

Bei dem Hostsystem 40 handelt es sich entweder um die Laufzeitumgebung der jeweiligen Produktionsmaschine 10 oder die Laufzeitumgebung der jeweiligen HMI-Plattform. Beide Laufzeitumgebungen können auch in zusammengefasster Form vorliegen. Zum Austausch von Daten mit einer anderen App 30 oder mit dem Hostsystem 40 oder einer entfernten Datenquelle (nicht gezeigt) weist jede App 30 eine Softwareschnittstelle 42 auf. Die Anzahl der in FIG 7 und FIG 8 gezeigten Apps 30 und damit der Umfang der dort gebildeten Container-Apps 32 ist für die Darstellung willkürlich gewählt. In der Praxis kann jede Container-App 32 zwei, drei und mehr Apps 30 umfassen.

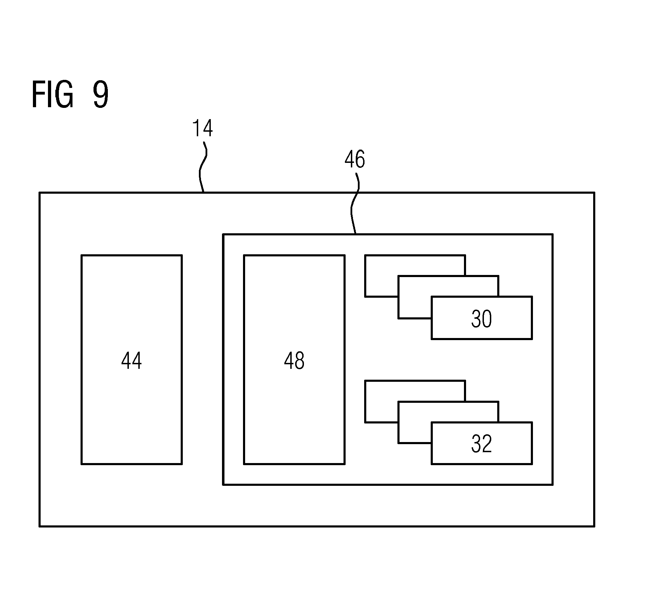

Die Darstellung in FIG 9 zeigt abschließend, allerdings in schematisch nochmals stark vereinfachter Form, die Bedieneinrichtung 14 aus FIG 1. Danach umfasst die Bedieneinrichtung 14 in an sich bekannter Art und Weise eine Verarbeitungseinheit 44 in Form von oder nach Art eines Mikroprozessors sowie einen Speicher 46. In den Speicher 46 ist ein Computerprogramm 48 ladbar und im Betrieb der Bedieneinrichtung 14 in den Speicher 46 geladen. Das Computerprogramm 48 stellt eine Implementation des hier beschriebenen Ansatzes mit gegebenenfalls einzelnen oder sämtlichen speziellen Ausführungsformen in Software dar. Das Computerprogramm 48 ermöglicht demnach zumindest die Zusammenfassung einer Mehrzahl von Apps 30 /Programmcode-Einheiten 30 sowie eine Platzierung einer solchen Zusammenfassung auf der jeweils zum Bedienen der Produktionsmaschine 10 vorgesehenen Bedienoberfläche 34. Das Computerprogramm 48 realisiert also die weiter oben erwähnte Editorumgebung und ermöglicht die Handhabung einzelner oder mehrerer Apps 30 und Container-Apps 32, die ebenfalls im Speicher der Bedieneinrichtung 14 abgelegt sind, im Sinne des hier vorgestellten Ansatzes.

Obwohl der neue Ansatz im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zum Bedienen einer Produktions- oder Werkzeugmaschine 10, wobei einzelne Funktionen der Produktions- oder Werkzeugmaschine 10 über kleine kompakte Programmcode-Einheiten 30 zugänglich sind, wobei eine Mehrzahl von Programmcode-Einheiten 30 zusammengefasst werden, um einen Handlungsablauf beim Bedienen der Produktions- oder Werkzeugmaschine 10 zu definieren, wobei eine solche Zusammenfassung einer Mehrzahl von Programmcode-Einheiten 30 auf einer zum Bedienen der Produktions- oder Werkzeugmaschine 10 vorgesehenen Bedienoberfläche 34 platziert wird und wobei die auf der Bedienoberfläche 34 platzierte Zusammenfassung von Programmcode-Einheiten 30 zur Auslösung des damit definierten Handlungsablaufs aufgerufen wird, sowie ein Computerprogramm 48 zur Implementierung des Verfahrens und eine Bedieneinrichtung 14 mit einem solchen als Software-Framework zur Zusammenstellung von Bedienabläufen für die Ausführung auf einer Bedieneinrichtung 14 fungierenden Computerprogramm 48.

## Patentansprüche

1. Verfahren zum Bedienen einer Produktions- oder Werkzeugmaschine (10),
- wobei einzelne Funktionen der Produktions- oder Werkzeugmaschine (10) über kleine kompakte Programmcode-Einheiten (30) zugänglich sind,
- wobei eine Mehrzahl von Programmcode-Einheiten (30) zusammengefasst werden, um einen Handlungsablauf beim Bedienen der Produktions- oder Werkzeugmaschine (10) zu definieren,
- wobei eine solche Zusammenfassung einer Mehrzahl von Programmcode-Einheiten (30) auf einer zum Bedienen der Produktions- oder Werkzeugmaschine (10) vorgesehenen Bedienoberfläche (34) platziert wird und
- wobei die auf der Bedienoberfläche (34) platzierte Zusammenfassung von Programmcode-Einheiten (30) zur Auslösung des damit definierten Handlungsablaufs aufgerufen wird.

2. Verfahren nach Anspruch 1, wobei es sich bei einer eine Funktion der Produktions- oder Werkzeugmaschine (10) zugänglich machenden Programmcode-Einheit (30) entweder um eine atomare, nicht weiter unterteilbare Programmcode-Einheit (30) oder eine zusammengesetzte Programmcode-Einheit (30) handelt, wobei eine zusammengesetzte Programmcode-Einheit (30) eine Kombination einer oder mehrerer atomarer und/oder einer oder mehrerer zusammengesetzter Programmcode-Einheiten (30) darstellt.

3. Verfahren nach Anspruch 2, wobei die oder jede auf der Bedienoberfläche (34) platzierte Zusammenfassung von Programmcode-Einheiten (30) in Form einer Zusammenfassung einzelner oder mehrerer atomarer und/oder einzelner oder mehrerer zusammengesetzter Programmcode-Einheiten (30) gebildet ist.

4. Verfahren nach einem der vorangehenden Ansprüche, wobei eine Zusammenfassung einer Mehrzahl von Programmcode-Einheiten (30) beim Platzieren auf der Bedienoberfläche (34) in Form eines Icons (36) erscheint und wobei eine Mehrzahl von Icons (36) in einer Gruppe (38) zusammengefasst wird und wobei in einer Gruppe (38) zusammengefasste Icons (36) in einer matrixförmigen Anordnung auf der Bedienoberfläche (34) erscheinen.

5. Verfahren nach einem der vorangehenden Ansprüche, wobei jede Programmcode-Einheit (30) eine Softwareschnittstelle (42) zum Datenaustausch mit anderen Programmcode-Einheiten (30) und/oder einem Hostsystem (40) der Produktions- oder Werkzeugmaschine (10) aufweist.

6. Verfahren nach einem der vorangehenden Ansprüche, wobei ein durch eine Zusammenfassung mehrerer Programmcode-Einheiten (30) definierter Handlungsablauf durch eine Änderung einer Reihenfolge der Programmcode-Einheiten (30) innerhalb der Zusammenfassung angepasst wird.

7. Verfahren nach einem der vorangehenden Ansprüche, wobei ein durch eine Zusammenfassung mehrerer Programmcode-Einheiten (30) definierter Handlungsablauf durch eine Vorgabe oder Änderung einer Verknüpfung der Programmcode-Einheiten (30) innerhalb der Zusammenfassung angepasst wird.

8. Verfahren nach Anspruch 7, wobei bei einer Verknüpfung einer Programmcode-Einheit (30) mit einer Mehrzahl weiterer Programmcode-Einheiten (30) derselben Zusammenfassung ein Ergebnis einer Ausführung der Programmcode-Einheit (30) die Auswahl einer der verknüpften Programmcode-Einheiten (30) bestimmt.

9. Verfahren nach einem der vorangehenden Ansprüche, wobei ein durch eine Zusammenfassung mehrerer Programmcode-Einheiten (30) definierter Handlungsablauf innoviert wird, indem einzelne Programmcode-Einheiten (30) aktualisiert werden.

10. Computerprogramm (48) mit Programmcodemitteln, um alle Schritte von jedem beliebigen der Ansprüche 1 bis 9 durchzuführen, wenn das Computerprogramm (48) auf einer zum Bedienen einer Produktions- oder Werkzeugmaschine (10) vorgesehenen Bedieneinrichtung (14) ausgeführt wird.

11. Bedieneinrichtung (14) zum Bedienen einer Produktions- oder Werkzeugmaschine (10) mit einer Verarbeitungseinheit (44) und einem Speicher (46), in den ein Computerprogramm (48) nach Anspruch 10 geladen ist, das im Betrieb der Bedieneinrichtung (14) durch dessen Verarbeitungseinheit (44) ausgeführt wird.

## Geänderte Patentansprüche

### Geänderte Patentansprüche gemäss Regel 137(2) EPÜ.

**1.** Verfahren zum Zugriff auf eine Produktions- oder Werkzeugmaschine (10),
- wobei einzelne Funktionen der Produktions- oder Werkzeugmaschine (10) über kleine kompakte Programmcode-Einheiten (30) zugänglich sind,
- wobei eine Mehrzahl von Programmcode-Einheiten (30) zusammengefasst werden, um einen Handlungsablauf beim Zugriff auf die Produktions- oder Werkzeugmaschine (10) zu definieren,
- wobei eine solche Zusammenfassung einer Mehrzahl von Programmcode-Einheiten (30) auf einer zum Zugriff auf die Produktions- oder Werkzeugmaschine (10) vorgesehenen Bedienoberfläche (34) platziert wird und
- wobei die auf der Bedienoberfläche (34) platzierte Zusammenfassung von Programmcode-Einheiten (30) zur Auslösung des damit definierten Handlungsablaufs aufgerufen wird, **dadurch gekennzeichnet,**
**dass** sich der Zugriff auf die Produktions- oder Werkzeugmaschine (10) auf eine Bedienung der Produktions- oder Werkzeugmaschine (10) bezieht.

**2.** Verfahren nach Anspruch 1, wobei es sich bei einer eine Funktion der Produktions- oder Werkzeugmaschine (10) zugänglich machenden Programmcode-Einheit (30) entweder um eine atomare, nicht weiter unterteilbare Programmcode-Einheit (30) oder eine zusammengesetzte Programmcode-Einheit (30) handelt, wobei eine zusammengesetzte Programmcode-Einheit (30) eine Kombination einer oder mehrerer atomarer und/oder einer oder mehrerer zusammengesetzter Programmcode-Einheiten (30) darstellt.

**3.** Verfahren nach Anspruch 2, wobei die oder jede auf der Bedienoberfläche (34) platzierte Zusammenfassung von Programmcode-Einheiten (30) in Form einer Zusammenfassung einzelner oder mehrerer atomarer und/oder einzelner oder mehrerer zusammengesetzter Programmcode-Einheiten (30) gebildet ist.

**4.** Verfahren nach einem der vorangehenden Ansprüche, wobei eine Zusammenfassung einer Mehrzahl von Programmcode-Einheiten (30) beim Platzieren auf der Bedienoberfläche (34) in Form eines Icons (36) erscheint und wobei eine Mehrzahl von Icons (36) in einer Gruppe (38) zusammengefasst wird und wobei in einer Gruppe (38) zusammengefasste Icons (36) in einer matrixförmigen Anordnung auf der Bedienoberfläche (34) erscheinen.

**5.** Verfahren nach einem der vorangehenden Ansprüche, wobei jede Programmcode-Einheit (30) eine Softwareschnittstelle (42) zum Datenaustausch mit anderen Programmcode-Einheiten (30) und/oder einem Hostsystem (40) der Produktions- oder Werkzeugmaschine (10) aufweist.

**6.** Verfahren nach einem der vorangehenden Ansprüche, wobei ein durch eine Zusammenfassung mehrerer Programmcode-Einheiten (30) definierter Handlungsablauf durch eine Änderung einer Reihenfolge der Programmcode-Einheiten (30) innerhalb der Zusammenfassung angepasst wird.

**7.** Verfahren nach einem der vorangehenden Ansprüche, wobei ein durch eine Zusammenfassung mehrerer Programmcode-Einheiten (30) definierter Handlungsablauf durch eine Vorgabe oder Änderung einer Verknüpfung der Programmcode-Einheiten (30) innerhalb der Zusammenfassung angepasst wird.

**8.** Verfahren nach Anspruch 7, wobei bei einer Verknüpfung einer Programmcode-Einheit (30) mit einer Mehrzahl weiterer Programmcode-Einheiten (30) derselben Zusammenfassung ein Ergebnis einer Ausführung der Programmcode-Einheit (30) die Auswahl einer der verknüpften Programmcode-Einheiten (30) bestimmt.

**9.** Verfahren nach einem der vorangehenden Ansprüche, wobei ein durch eine Zusammenfassung mehrerer Programmcode-Einheiten (30) definierter Handlungsablauf innoviert wird, indem einzelne Programmcode-Einheiten (30) aktualisiert werden.

**10.** Computerprogramm (48) mit Programmcodemitteln, um alle Schritte von jedem beliebigen der Ansprüche 1 bis 9 durchzuführen, wenn das Computerprogramm (48) auf einer zum Bedienen einer Produktions- oder Werkzeugmaschine (10) vorgesehenen Bedieneinrichtung (14) ausgeführt wird.

**11.** Bedieneinrichtung (14) zum Bedienen einer Produktions-oder Werkzeugmaschine (10) mit einer Verarbeitungseinheit (44) und einem Speicher (46), in den ein Computerprogramm (48) nach Anspruch 10 geladen ist, das im Betrieb der Bedieneinrichtung (14) durch dessen Verarbeitungseinheit (44) ausgeführt wird.
